# FASCICULE DE BREVET EUROPEEN

(11) **EP 3 233 545 B1**
(45) Date de publication et mention de la délivrance du brevet: **12.09.2018**
(21) Numéro de dépôt: 15830800.7
(22) Date de dépôt: 17.12.2015
(51) Int. Cl.: B60G 17/027, F16F 1/04, F16F 1/12

(54) **DISPOSITIF HYDRAULIQUE DE RÉGLAGE DE GARDE AU SOL POUR VÉHICULE AUTOMOBILE ET SYSTÈME DE SUSPENSION ET D'AMORTISSEMENT COMPRENANT UN TEL DISPOSITIF**
HYDRAULISCHE VORRICHTUNG ZUR EINSTELLUNG DER BODENFREIHEIT FÜR EIN KRAFTFAHRZEUG SOWIE AUFHÄNGUNGS- UND DÄMPFUNGSSYSTEM MIT SOLCH EINER VORRICHTUNG
HYDRAULIC DEVICE FOR ADJUSTING GROUND CLEARANCE FOR A MOTOR VEHICLE AND SUSPENSION AND DAMPING SYSTEM COMPRISING SUCH A DEVICE

(30) Priorité: 18.12.2014 FR 1462680
(43) Date de publication de la demande: 25.10.2017
(73) Titulaire: Renault S.A.S., 92100 Boulogne-Billancourt (FR)
(72) Inventeur: BOICEA, Niculae, Arges (RO); BARBOI, Florin, Arges (RO); BUSE, Petru Sorin, Bucuresti (RO)
(86) Numéro de dépôt international: PCT/FR2015/053576
(87) Numéro de publication internationale: WO 2016/097624

(56) Documents cités:
- EP-A2- 2 610 090
- DE-A1-102011 079 714
- DE-A1-102012 112 717
- DE-B3-102006 005 102
- FR-A1- 2 745 238
- US-A- 4 830 395

## Description

### DOMAINE TECHNIQUE AUQUEL SE RAPPORTE L'INVENTION

La présente invention concerne de manière générale le domaine des systèmes de suspension et d'amortissement de véhicules automobiles.

Elle concerne plus particulièrement un dispositif hydraulique de réglage de garde au sol pour véhicule automobile adapté à être engagé sur une tige de piston d'un système de suspension et d'amortissement du véhicule automobile, afin de s'interposer entre, d'une part, la carrosserie du véhicule automobile, et, d'autre part, un ressort dudit système de suspension et d'amortissement suivant le préambule de la revendication 1. Un exemple d'un tel dispositif est décrit dans le document DE 10 2011 079 714 A1. Elle concerne également un système de suspension et d'amortissement à monter sur un châssis d'un véhicule automobile, comportant une tige de piston adaptée à être fixée au châssis du véhicule automobile, un ressort engagé sur la tige de piston, et un dispositif hydraulique tel que précité.

L'invention s'applique particulièrement avantageusement aux véhicules automobiles de type tout-terrain.

### ARRIERE-PLAN TECHNOLOGIQUE

Un véhicule automobile comporte généralement, au niveau de ses quatre roues, un système de suspension et d'amortissement qui permet d'adoucir les irrégularités de la route empruntée par le véhicule afin d'améliorer le confort du véhicule et d'optimiser sa tenue de route.

Il est connu d'équiper un tel système de suspension et d'amortissement d'un dispositif hydraulique de réglage de garde au sol afin de pouvoir régler la distance séparant le châssis du sol, au niveau de chacune des roues du véhicule, et ce alors que le véhicule est en service.

Modifier cette distance permet par exemple de changer l'assiette du véhicule, afin d'optimiser sa tenue de route en fonction des conditions de marche. Cela permet aussi de modifier la garde au sol du véhicule, c'est-à-dire la distance séparant le sol de l'ensemble du châssis. Cette dernière fonctionnalité permet, en réduisant la garde au sol, d'optimiser la tenue de route lors d'une conduite rapide du véhicule automobile sur un sol peu accidentée, tandis qu'une garde au sol augmentée permettra par exemple de progresser sur des terrains accidentés, en milieu rural, ou de franchir des obstacles élevés tels que des trottoirs.

On connaît notamment du document FR 2 745 238 un système de suspension et d'amortissement tel que précité, dont le dispositif hydraulique est comparable à un vérin au moyen duquel la distance entre la roue et le châssis du véhicule automobile peut être modifiée.

Dans ce document, le dispositif hydraulique comporte des butées en position rétractée qui sont adaptées à venir s'appuyer contre des butées complémentaires extérieures au dispositif hydraulique. De ce fait, on comprend que ce dispositif hydraulique ne peut être monté que dans des systèmes de suspension et d'amortissement prévus pour l'accueillir. Il ne peut en revanche pas être monté, par exemple en après-vente, dans des systèmes de suspension et d'amortissement préexistants.

L'ensemble du dispositif hydraulique est par ailleurs situé au plus près de l'axe de la tige de piston de ce système de suspension et d'amortissement, sur laquelle il glisse, et ce afin de réduire la circonférence des joints utilisés pour l'étanchéifier, ce qui permet de réduire les frottements qu'ils induisent. Localiser ainsi le dispositif hydraulique au voisinage de la tige de piston augmente en revanche sa longueur le long de celle-ci et le rend encombrant dans la direction de son axe.

### OBJET DE L'INVENTION

Afin de remédier aux inconvénients précités de l'état de la technique, la présente invention propose un dispositif hydraulique de réglage de garde au sol pour véhicule automobile adapté à être engagé sur une tige de piston d'un système de suspension et d'amortissement du véhicule automobile, afin de s'interposer entre, d'une part, la carrosserie du véhicule automobile, et, d'autre part, un ressort dudit système de suspension et d'amortissement, comprenant entre autres un cylindre extérieur, un retour agencé avec le cylindre extérieur d'une manière étanche en partie basse et un piston engagé entre le retour et le cylindre extérieur, dans lequel le retour délimite avec le cylindre extérieur une rainure annulaire à l'intérieur de laquelle le piston est adapté à coulisser axialement, ledit retour présentant une extrémité libre formant une ouverture circulaire adaptée à être engagée sur la tige de piston, de telle manière que ledit retour délimite avec ledit piston une chambre de compression.

Autrement formulé, la jupe du piston est prévue pour coulisser entre le cylindre extérieur et le retour, si bien que le retour est prévu pour s'engager à l'intérieur de la jupe du piston lorsque le piston s'enfonce dans le cylindre extérieur.

On comprend ainsi qu'en position enfoncée, l'extrémité du retour est placée à proximité du fond du piston de sorte que le dispositif hydraulique occupe une place réduite le long de la tige de piston.

Cette géométrie permet d'intégrer facilement le dispositif hydraulique dans un système de suspension et d'amortissement qui n'en serait initialement pas équipé, réduisant ainsi les coûts de conception et de production d'une gamme de véhicules automobiles.

Il est en effet avantageux, en termes de coûts de conception et de production, de pouvoir proposer une gamme de véhicules automobiles comprenant plusieurs modèles plus ou moins perfectionnés, déclinés à partir d'un modèle de base commun. Le modèle de base peut par exemple être dépourvu de dispositif hydraulique de réglage de garde au sol, tandis qu'un modèle plus perfectionné est pourvu d'un tel dispositif.

Lors de la conception d'une telle gamme de véhicules automobiles, on peut par exemple prévoir d'ajouter des options au modèle de base, le moins coûteux, de la gamme de véhicules automobiles. Cette manière de procéder est très intéressante en termes de coûts, mais s'accompagne de contraintes pour les dispositifs supplémentaires ajoutés, qui doivent être compacts et pouvoir être intégrés au modèle de base en en modifiant le moins possible les caractéristiques.

Grâce au faible encombrement du dispositif hydraulique le long de la tige du piston, c'est le cas de la présente invention qui ne modifie que peu la géométrie d'ensemble du châssis par rapport aux roues.

Avantageusement, ledit retour comporte un cylindre intérieur qui délimite intérieurement un logement fermé du côté de l'extrémité libre du retour par un chapeau et ouvert du côté opposé.

Selon une autre caractéristique avantageuse de l'invention, le piston étant adapté à coulisser dans la rainure annulaire entre deux positions rétractée et déployée, ledit piston comporte une collerette adaptée à venir en appui contre le cylindre extérieur et/ou contre le retour afin de :
- former une butée pour le piston en l'une desdites deux positions rétractée et déployée.
- former une butée pour le piston en l'autre desdites deux positions rétractée et déployée.

Les butées qui arrêtent le déploiement et la contraction du dispositif hydraulique 1 sont donc incluses dans celui-ci, ce qui concoure à rendre le dispositif hydraulique autonome dans son fonctionnement. Cette autonomie de fonctionnement est particulièrement intéressante ici puisqu'elle permet de limiter au minimum les modifications qu'il faut apporter à un système de suspension et d'amortissement de véhicule automobile ne comportant initialement pas de dispositif de réglage de garde au sol afin de pouvoir y introduire le dispositif hydraulique précité.

D'autres caractéristiques non limitatives et avantageuses du dispositif hydraulique conforme à l'invention sont les suivantes :
- le piston est équipé de moyens de coulissement et de guidage, qui prennent appui sur le cylindre extérieur et/ou sur le retour de manière à guider le coulissement axial du piston dans ladite rainure annulaire ;
- lesdits moyens de coulissement et de guidage sont fixés à ladite collerette ;
- le cylindre extérieur et/ou le retour comportent des moyens de coulissement et de guidage, qui prennent appui sur le piston de manière à guider le coulissement axial du piston dans ladite rainure annulaire ;
- le cylindre extérieur et/ou le retour comportent des moyens de coulissement qui sont adaptés à prendre appui sur la tige de piston de manière à guider le coulissement axial du retour sur la tige de piston ; et
- ledit retour constitue une pièce mécanique distincte dudit cylindre extérieur, qui est montée fixement à l'intérieur dudit cylindre extérieur.

Il est également prévu un système de suspension et d'amortissement à monter sur un châssis d'un véhicule automobile, comportant :
- une tige de piston adaptée à être fixée au châssis du véhicule automobile,
- un ressort engagé sur la tige de piston, et
- un dispositif hydraulique tel que décrit ci-dessus, qui est engagé sur ladite tige de piston afin de s'interposer entre, d'une part, le châssis du véhicule automobile, et, d'autre part, le ressort,
et dans lequel la tige de piston présente un conduit interne dont une extrémité est connectée à un tuyau d'amenée de fluide de compression, et dont l'autre extrémité débouche dans ladite chambre de compression.

Le tuyau d'amenée de fluide de compression qui alimente la chambre de compression est ainsi déplacé à l'extérieur du système de suspension et d'amortissement, ce qui en facilite le montage et le raccordement.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en coupe axiale d'un dispositif hydraulique conforme à l'invention, représenté en position déployée, et
- la figure 2 est une vue schématique en coupe axiale du dispositif hydraulique de la figure 1, représenté en position rétractée.

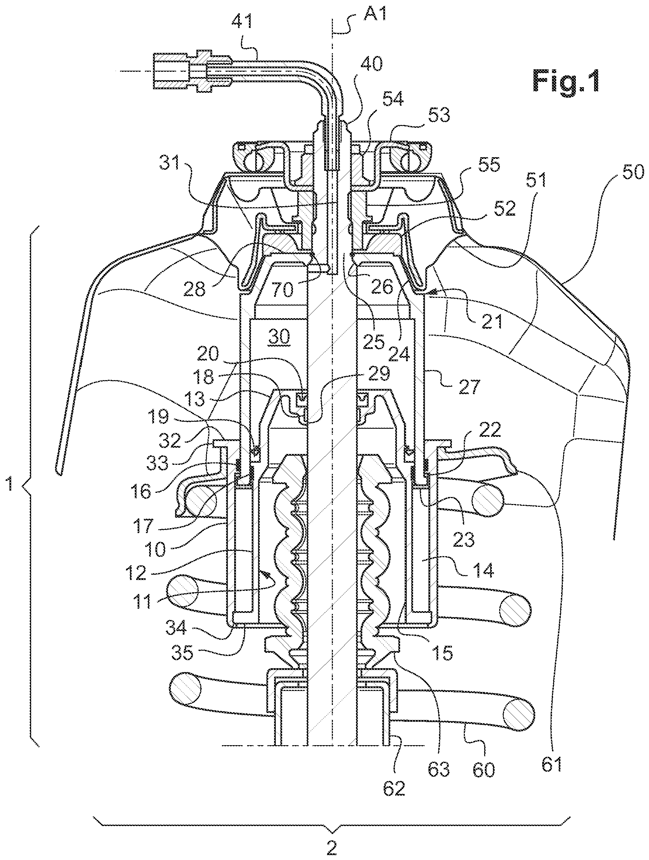

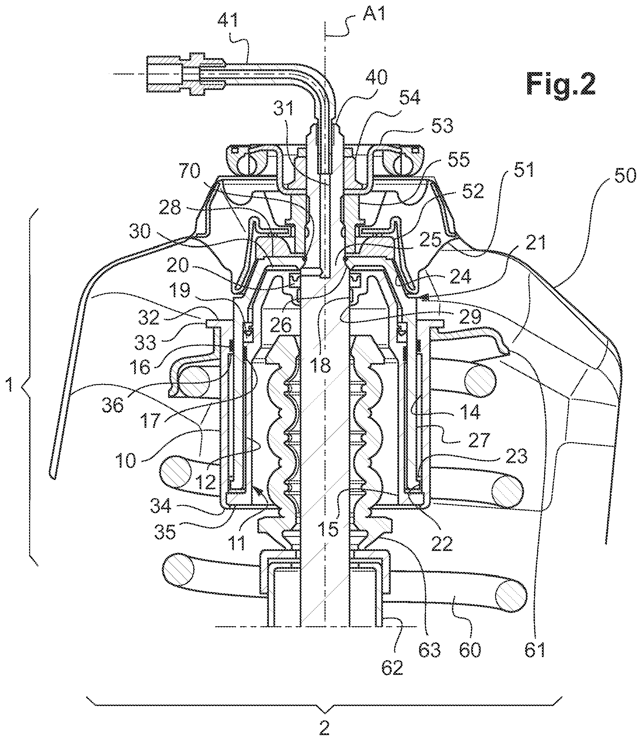

Sur les figures 1 et 2, on a représenté un dispositif hydraulique 1 permettant de régler la garde au sol d'un véhicule automobile.

Ce dispositif hydraulique 1 s'applique particulièrement avantageusement à un véhicule automobile comportant un châssis 50 (qui comprend notamment la carrosserie du véhicule) et quatre roues chacune reliée au châssis 50 par un système de suspension et d'amortissement 2.

Dans la description, les termes «inférieur » et «supérieur » seront utilisés par rapport à ce véhicule automobile, la partie inférieure d'un élément désignant la partie de cet élément qui est située du côté du sol et la partie supérieure désignant la partie de cet élément qui est située à l'opposé.

Le dispositif hydraulique est plus précisément prévu pour compléter le système de suspension et d'amortissement 2 afin de permettre un réglage de la garde au sol du véhicule.

Il est prévu pour s'intégrer plus précisément à un système de suspension et d'amortissement 2 comportant au moins un ressort de suspension et/ou un amortisseur hydraulique.

Ici, ce système de suspension et d'amortissement 2 comprend un amortisseur hydraulique qui ne fait pas en propre l'objet de la présente invention et qui ne sera donc pas décrit en détail. On notera seulement que cet amortisseur comporte un corps d'amortisseur 62 qui est relié à l'une des roues du véhicule automobile et une tige de piston 40 qui est reliée au châssis 50 du véhicule automobile et qui traverse axialement le corps d'amortisseur 62 pour amortir les déplacements verticaux du véhicule automobile par rapport au sol.

Le système de suspension et d'amortissement 2 comprend aussi ici un ressort 60 assurant la suspension du véhicule automobile. Le ressort 60 est engagé autour de l'amortisseur et est situé autour du même axe. Le ressort 60 est par ailleurs monté en précontrainte entre un appui de ressort 61 (également appelé coupelle ressort selon une certaine littérature), situé du côté du châssis 50, et un appui de roue (non visible sur les figures), situé du côté de la roue.

Le châssis 50 du véhicule automobile fait partie de ce qu'il convient d'appeler les « masses suspendues », en ce sens qu'il est suspendu au-dessus du sol par les systèmes de suspension et d'amortissement 2. Au contraire, les roues appartiennent aux parties non suspendues du véhicule.

Sur un véhicule d'entrée de gamme, le châssis pourrait s'appuyer directement sur les systèmes de suspension et d'amortissement.

Toutefois, dans la présente invention, le châssis 50 s'appuie sur chaque système de suspension et d'amortissement 2, via le dispositif hydraulique 1.

Le dispositif hydraulique 1 est manoeuvré par un fluide de compression, à la manière d'un vérin, ce qui permet de modifier la distance séparant l'appui de ressort 61 et le châssis 50, comme cela sera expliqué ci-dessous. Modifier ainsi la distance séparant l'appui de ressort 61 et le châssis 50 permet de régler la garde au sol du véhicule automobile. Par exemple, en augmentant la distance séparant l'appui de ressort 61 et le châssis 50, au niveau de chacune des quatre roues du véhicule automobile, on augmente la distance séparant le châssis du sol.

Le dispositif hydraulique 1 comprend un piston 21 qui est engagé sur la tige de piston 40 et qui est monté fixe par rapport au châssis 50. Ce piston 21 est ici solidarisé à la tige de piston 40.

Le dispositif hydraulique 1 comprend aussi un cylindre extérieur 10 qui est fixé à une extrémité supérieure du ressort 60 (via la coupelle ressort). Ici, le cylindre extérieur 10 est solidarisé à l'appui de ressort 61. Le piston 21 est engagé au travers d'une extrémité supérieure 32 de ce cylindre extérieur 10.

Selon une caractéristique particulièrement avantageuse de l'invention, le cylindre extérieur 10 porte par ailleurs, à son extrémité inférieure 34, un retour 11 qui délimite avec le cylindre extérieur 10 une rainure annulaire 14 à l'intérieur de laquelle le piston 21 est adapté à coulisser axialement, et le retour 11 présente une extrémité libre supérieure qui forme une ouverture 29 adaptée à être engagée sur la tige de piston 40 de manière à délimiter avec le piston 21 une chambre de compression 30 traversée par la tige de piston 40. C'est cette chambre de compression 30 qui reçoit le fluide de compression pour manoeuvrer le dispositif hydraulique 1.

Dans le mode de réalisation représenté sur les figures, le dispositif hydraulique 1 est symétrique par révolution autour de l'axe A1 de la tige de piston 40.

Le piston 21 a une forme de cloche comprenant une jupe cylindrique 27 ouverte vers le bas et fermée vers le haut par un chapeau 24. Le chapeau 24 comporte une paroi supérieure circulaire au centre de laquelle est ménagée une ouverture circulaire 25 engagée sur la tige de piston 40.

Pour empêcher le piston 21 de coulisser le long de la tige de piston 40 vers le bas, le bord de l'ouverture circulaire 25 présente un chanfrein 26 ouvert vers le bas, qui a une forme complémentaire d'un épaulement prévu sur la tige de piston 40 sur lequel il prend appui.

Pour empêcher le piston 21 de coulisser le long de la tige de piston 40 vers le haut, il est prévu des moyens de butée qui s'interposent entre le haut du piston 21 et le châssis 50.

Plus précisément ici, le chapeau 24 du piston 21 présente, entre sa paroi supérieure et la jupe cylindrique 27, une partie tronconique dont le sommet est tourné vers le haut. C'est sur cette partie tronconique ainsi que sur la paroi supérieure que le châssis 50 du véhicule automobile va s'appuyer, par l'intermédiaire d'un bloc 51 et d'une butée 52, selon certaine littérature, la butée 52 peut être appelée butée tournante. La butée 52 constitue une sorte d'anneau qui vient directement s'appuyer contre la paroi supérieure 28 du piston 21 en pressant un joint annulaire d'étanchéité 70. Le bloc 51 forme quant à lui une pièce annulaire qui vient s'interposer entre, d'un côté, la butée 52, et, de l'autre, la carrosserie du châssis 50, et qui vient en outre s'appuyer contre la partie tronconique du chapeau 24. Le châssis 50, le bloc 51 et la butée 52 sont maintenus contre le piston 21 par le poids du véhicule. Ils sont par ailleurs fixés au piston 21 par des moyens de vissage vissés en force sur la tige de piston 40, afin d'assurer la cohésion de l'ensemble en cas de secousse du véhicule automobile.

Comme le montre la figure 1, le cylindre extérieur 10 présente une forme cylindrique de révolution autour de l'axe A1, de diamètre intérieur supérieur au diamètre extérieur du piston 21.

Il prend appui sur le ressort 60 par l'intermédiaire de l'appui de ressort 61. Il comporte pour cela, le long de son extrémité supérieure 32, une collerette 33 en saillie sur sa face externe.

L'appui de ressort 61 forme quant à lui une sorte de coupelle annulaire. Il présente une ouverture centrale par laquelle il est engagé en force sur le cylindre extérieur 10. Cette ouverture centrale est bordée par un rebord qui vient s'appuyer contre la collerette 33, de manière à bloquer l'appui de ressort 61 par rapport au cylindre extérieur 10. Il présente par ailleurs une partie périphérique de forme incurvée vers le bas, de manière à pouvoir accueillir l'extrémité haute du ressort 60.

Comme le montre encore la figure 1, de manière analogue au piston 21, le retour 11 a une forme de cloche comprenant un cylindre intérieur 12 ouvert vers le bas et fermé vers le haut par un chapeau 13. Le cylindre intérieur 12 délimite avec le cylindre extérieur 10 la rainure annulaire 14 mentionnée précédemment, à l'intérieur de laquelle le piston 21 est adapté à coulisser axialement. Le cylindre intérieur 12 est bordé, le long de son extrémité inférieure, par une collerette 35 débordant extérieurement du cylindre intérieur 12, et par laquelle le cylindre intérieur 12 se fixe au cylindre extérieur 10.

Ici, le retour 11 et le cylindre extérieur 10 forment deux pièces mécaniques distinctes, fixées l'une à l'autre, par exemple au moyen d'un filetage prévu au niveau du bord externe de la collerette 35. D'autres moyens de fixation pourraient être envisagés (soudure, emboîtement, ...).

Le chapeau 13, qui prolonge le cylindre intérieur 12 du côté opposé à la collerette 35, présente à son sommet une paroi plane de forme circulaire dans laquelle est ménagée l'ouverture circulaire 29 engagée sur la tige de piston 40. Cette ouverture circulaire 29 présente des dimensions telles que le retour 11 peut coulisser le long de la tige de piston 40.

Comme cela a été exposé supra, le retour 11 délimite ainsi avec le piston 21 la chambre de compression 30 qui reçoit le fluide de compression manoeuvrant le dispositif hydraulique 1, et la chambre de compression 30 est traversée par la tige de piston 40.

Les formes sensiblement complémentaires du retour 11 et du piston 21 permettent de réduire au mieux le volume mort de la chambre de compression 30 (lorsque le piston est en position rétractée comme cela est visible sur la figure 2), et donc de réduire au mieux l'encombrement du dispositif hydraulique 1 dans la direction de l'axe de la tige de piston 40.

Le retour 11 forme, comme cela est décrit ci-dessus, une cloche, ouverte vers le bas. Le retour 11 délimite ainsi intérieurement un logement 15, ouvert vers le bas, et traversé axialement par la tige de piston 40. La face interne du cylindre intérieur 12 présentant un diamètre sensiblement supérieur à celui de la tige de piston 40, le logement 15 peut alors accueillir une partie du système de suspension et d'amortissement 2 (à savoir ici une butée amortissante 63 engagée sur la tige de piston 40).

Cette butée amortissante 63 repose sur le corps d'amortisseur 62. Elle permet, en s'interposant entre le corps d'amortisseur 62 et le retour 11, de limiter en compression la course du système d'amortissement et de suspension 2, en particulier lorsque le véhicule automobile est soumis verticalement à de fortes sollicitations.

Le dispositif hydraulique 1 est représenté sur les figures soit en position déployée (figure 1), soit en position rétractée (figure 2). Des moyens de coulissement et de guidage sont prévus de manière à assurer un déplacement adapté du piston 21, du cylindre extérieur 10 et du retour 11 lors d'un changement de position du dispositif hydraulique 1. Des moyens de butée permettent par ailleurs de bloquer le coulissement du piston en position rétractée et en position déployée.

Lorsque le dispositif hydraulique 1 est manoeuvré, l'ensemble comprenant le piston 21 et la tige de piston 40 se déplace axialement par rapport à l'ensemble comprenant le cylindre extérieur 10 et le retour 11. La tige de piston 40 coulisse alors dans l'ouverture circulaire 29 du retour 11, tandis que la jupe cylindrique 27 du piston 21 coulisse dans la rainure annulaire 14 délimitée entre le retour 11 et le cylindre extérieur 10.

Les moyens de coulissement et de guidage et les moyens de butée précités sont alors formés de la manière suivante.

La jupe cylindrique 27 du piston 21 comporte, du côté de son extrémité inférieure, une collerette 22 qui en déborde extérieurement. La collerette 22 est engagée dans la rainure annulaire 14. Elle est recouverte d'une bague 23. On observe ici que la rainure annulaire 14 présente une largeur qui correspond à l'épaisseur du piston 21 au niveau de cette bague 23, ce qui permet de guider le coulissement du piston 21 dans cette rainure annulaire 14.

Cette bague 23 présente une section en forme de U dont une des branches est plus courte que l'autre.

Les deux branches du U délimitent entre elles une gorge par laquelle la bague 23 est engagée sur la collerette 22. La bague 23, une fois insérée sur la collerette 22, présente une surface externe cylindrique qui vient s'appuyer sur la surface intérieure du cylindre extérieur 10, sur laquelle elle peut glisser. La collerette 22 munie de la bague 23 guide ainsi le piston 21 lorsqu'il coulisse axialement par rapport au cylindre extérieur 10.

La bague 23, une fois insérée sur la collerette 22, présente également une face inférieure plane, perpendiculaire à l'axe A1 de la tige de piston 40. Cette face inférieure est conçue pour venir s'appuyer sur le fond de la gorge 14, constitué par la collerette 35, pour former une butée en position rétractée du dispositif hydraulique 1, comme cela est illustré sur la figure 2.

Le cylindre extérieur 10 présente intérieurement, du côté de son extrémité supérieure 32, un épaulement 36 (voir figure 2). La face supérieure de la bague 23 est conçue pour venir s'appuyer contre cet épaulement 36 pour former une butée en position déployée du dispositif hydraulique 1, comme cela est illustré sur la figure 1.

Les butées qui arrêtent le déploiement et la contraction du dispositif hydraulique 1 sont donc incluses dans celui-ci. Le dispositif hydraulique 1 est ainsi adapté à fonctionner de manière autonome, sans intervention d'éléments extérieurs. Ce caractère autosuffisant du dispositif hydraulique 1 est particulièrement intéressant ici puisqu'il permet de limiter au minimum les modifications qu'il faut apporter à un système de suspension et d'amortissement de véhicule automobile ne comportant initialement pas de dispositif de réglage de garde au sol afin de pouvoir y introduire le dispositif hydraulique 1.

Le piston 21 est également guidé dans son coulissement axial par rapport au cylindre extérieur 10 au moyen d'une bague cylindrique 16. La bague 16 est insérée dans une gorge pratiquée sur la surface intérieure du cylindre extérieur 10, entre l'épaulement 36 et l'extrémité supérieure 32 du cylindre extérieur. La bague 16 ainsi insérée est solidarisée en translation axiale au cylindre extérieur 10. Elle s'appuie sur la surface extérieure de la jupe cylindrique 27 sur laquelle elle peut glisser.

Une bague cylindrique 17 est par ailleurs prévue entre la jupe cylindrique 27 du piston 21 et le cylindre intérieur 12 pour assurer le coulissement du retour 11 dans le piston 21. La bague 17 est insérée dans une gorge pratiquée sur la surface extérieure du cylindre intérieur 12, approximativement en vis-à-vis de l'épaulement 36. La bague 17 ainsi insérée est solidarisée en translation axiale au cylindre intérieur 12. Elle s'appuie sur la surface intérieure de la jupe cylindrique 27 du piston 21 sur laquelle elle peut coulisser.

Une bague cylindrique 18 assure enfin le coulissement de la tige de piston 40 au travers de l'ouverture 29 prévue dans le chapeau 13 du retour 11. La bague cylindrique 18 est insérée dans une gorge pratiquée dans le bord de l'ouverture circulaire 29. La bague 18 est ainsi solidarisée en translation axiale au retour 11. Elle s'appuie sur la tige de piston 40 sur laquelle elle peut coulisser.

La chambre de compression 30 est étanchéifiée par des joints. Un premier joint à lèvre 19 est interposé entre le piston 21 et le retour 11. Un deuxième joint à lèvre 20 est interposé entre le retour 11 et la tige de piston 40. Un troisième joint, non représenté, interposé entre la tige de piston 40 et le piston 21 finit d'assurer l'étanchéité de la chambre de compression 30.

Le premier joint à lèvre 19 est inséré dans une gorge pratiquée dans la face externe du retour 11, approximativement en vis-à-vis de la bague 16. Il est fixé au retour 11 et s'appuie sur la surface intérieure de la jupe cylindrique 27 sur laquelle il peut glisser.

Le deuxième joint à lèvre 20 est inséré dans une gorge pratiquée dans le bord de l'ouverture 29 prévue dans le chapeau 13 du retour 11. Il est fixé au retour 11 et s'appuie sur la tige de piston 40 sur laquelle il peut glisser.

Le troisième joint 70, annulaire, est serré entre la tige de piston 40 et le piston 21, au niveau de l'ouverture 25 présente dans le chapeau 24 du piston 21. Le troisième joint est fixé au piston 21 et de la tige de piston 40.

Le fluide de compression qui manoeuvre le dispositif hydraulique 1, par exemple de l'huile, est introduit dans la chambre de compression 30 ou refoulé de celle-ci par un conduit 31 intérieur à la tige de piston 40. Le conduit 31 comporte deux parties cylindriques qui forment un coude à angle droit. La première partie du conduit cylindrique 31 est pratiquée le long de l'axe A1 de la tige de piston 40, depuis le sommet de la tige de piston 40 jusqu'au coude qui la relie à la deuxième partie du conduit 31. La deuxième partie du conduit 31 est perpendiculaire à l'axe A1 de la tige de piston 40 et relie la première partie du conduit 31 à la chambre de compression 30. Le conduit 31 débouche ainsi dans la chambre de compression 30, juste en dessous du contact entre la tige de piston 40 et le piston 21.

Un tuyau 41 d'amenée de fluide de compression est connecté à l'extrémité du conduit 31 qui débouche au sommet de la tige de piston 40.

Ménager ainsi un conduit interne à la tige de piston 40 simplifie le montage du dispositif : en montant la tige de piston 40 sur le piston 21, on installe sans opération supplémentaire un conduit amenant le fluide de compression dans la chambre de compression 30.

Le fait que le conduit 31 débouche au sommet de la tige de piston 40 permet par ailleurs à ce dernier de bénéficier de la traversée prévue dans le châssis 50 du véhicule pour accueillir la tige de piston 40, ce qui rend le conduit 31 facilement accessible et raccordable à un système annexe (comprenant par exemple une pompe hydraulique) qui manoeuvre le dispositif hydraulique 1.

Lorsque le dispositif hydraulique 1 est placé en position rétractée (figure 2), la pression dans le fluide de compression présent dans la chambre de compression 30 est proche de la pression atmosphérique. Pour amener le dispositif hydraulique 1 en position déployée, une pompe hydraulique alimente la chambre de compression 30 en fluide de compression sous pression, via le tuyau 41 et le conduit 31 notamment.

Sous l'effet de ce fluide de compression sous pression, le piston 21 se soulève, et coulisse axialement par rapport au retour 11 pour s'en écarter progressivement au fur et à mesure que la chambre de compression, remplie de fluide de compression, augmente en volume. Le piston 21 soulève ainsi le châssis 50 du véhicule automobile, et augmente de la sorte la distance qui le sépare du sol. La pression appliquée par la pompe hydraulique au fluide de compression lors de cette opération est supérieure à un seuil déterminé. Ce seuil est par exemple compris entre 10 et 30 bars.

A partir d'une position totalement ou partiellement déployée du dispositif hydraulique 1, on peut réduire la distance séparant le sol de la carrosserie du véhicule en réduisant la pression régnant dans la chambre de compression 30. Le poids du véhicule automobile comprime alors le fluide de compression et le refoule hors de la chambre de compression 30, vers le réservoir de la pompe hydraulique. Le piston 21 coulisse alors axialement par rapport au retour 11 dont il se rapproche progressivement, au fur et à mesure que le volume de la chambre de compression diminue, ce qui rapproche progressivement du sol le châssis 50 du véhicule.

Le fait de réduire au minimum le volume mort de la chambre de compression 30 et le fait de prévoir un logement 15 dans le retour 11 concourent, comme cela a été mentionné ci-dessus, à réduire l'encombrement du dispositif hydraulique 1 le long de la tige de piston 40.

Le dispositif hydraulique 1 peut ainsi être prévu pour être installé sur un modèle de véhicule automobile issu d'une gamme de véhicules automobiles comprenant notamment :
- un modèle pourvu de dispositifs hydrauliques de réglage de garde au sol 1, et
- un modèle qui n'est pas pourvu d'un dispositif de réglage de garde au sol.

Le modèle non pourvu d'un dispositif de réglage de garde au sol comporte des systèmes de suspension et d'amortissement dont les composants sont similaires de ceux du système de suspension et d'amortissement 2 précité (il comprend notamment les composants suivants : le bloc 51, la butée 52, une butée 53, un écrou 54, une entretoise 55, une tige de piston similaire à la tige de piston 40, le corps d'amortisseur 62, la butée amortissante 63, le ressort 60, et l'appui de ressort 61).

Dans un tel système, lors d'une utilisation courante du véhicule automobile, les éléments précités sont positionnés approximativement comme cela est représenté sur la figure 2. Le système de suspension et d'amortissement du modèle de véhicule qui ne comporte pas de dispositif de réglage de garde au sol comprend en outre une pièce d'appui intermédiaire qui s'interpose entre la butée 55 et l'appui de ressort 61.

Le dispositif hydraulique 1, en raison du logement 15, peut avantageusement s'intercaler dans un tel système de suspension et d'amortissement, entre la butée 55 et l'appui de ressort 61, à la place de ladite pièce d'appui intermédiaire, et ce :
- sans qu'il soit nécessaire de modifier les composants communs aux deux systèmes de suspension et d'amortissement (composants qui comprennent le bloc 51, la butée 52, la butée 53, l'écrou 54, l'entretoise 55, le ressort 60, l'appui de ressort 61, le corps d'amortisseur 62, et la butée amortissante 63), ce qui est très intéressant en termes de coûts de conception et de production ;
- sans modifier la géométrie du système de suspension (lorsque le dispositif hydraulique 1 est en position rétractée), et donc sans modifier le positionnement des roues par rapport au châssis du véhicule automobile, positionnement qu'il est souhaitable de conserver pour ne pas remettre en cause la conception d'ensemble de la géométrie du véhicule automobile ; et
- sans modifier la masse des parties non-suspendues du véhicule (notamment le ressort 60, le corps d'amortisseur 62 et la butée amortissante 63), et donc sans modifier la dynamique du système de suspension et d'amortissement, dynamique qu'il est à nouveau souhaitable de conserver pour ne pas remettre en cause la conception du véhicule automobile.

## Revendications

1. Dispositif hydraulique (1) de réglage de garde au sol pour véhicule automobile, adapté à être engagé sur une tige de piston (40) d'un système de suspension et d'amortissement (2) du véhicule automobile afin de s'interposer entre, d'une part, le châssis (50) du véhicule automobile, et, d'autre part, un ressort (60) dudit système de suspension et d'amortissement (2), comprenant :
- un cylindre extérieur (10) dont au moins une première extrémité (32) est ouverte, et
- un piston (21) engagé au travers de la première extrémité (32) du cylindre extérieur (10),
dans lequel le cylindre extérieur (10) porte, à une seconde extrémité (34) opposée à sa première extrémité (32), un retour (11) qui délimite avec le cylindre extérieur (10) une rainure annulaire (14) à l'intérieur de laquelle le piston (21) est adapté à coulisser axialement, ledit retour (11) présentant une extrémité libre dans laquelle est ménagée une ouverture circulaire (29) adaptée à être engagée sur la tige de piston (40), de telle manière que ledit retour (11) délimite avec ledit piston (21) une chambre de compression (30),
**caractérisé en ce que** le piston (21) est adapté à coulisser dans la rainure annulaire (14) entre deux positions rétractée et déployée, le piston (21) comportant une collerette (22) adaptée à venir en appui contre le cylindre extérieur (10) et/ou contre le retour (11) afin de former une butée pour le piston (21) en ladite position déployée.

2. Dispositif hydraulique (1) selon la revendication 1, dans lequel ledit retour (11) comporte un cylindre intérieur (12) qui délimite intérieurement un logement (15) fermé du côté de l'extrémité libre du retour (11) par un chapeau (13) et ouvert du côté opposé.

3. Dispositif hydraulique (1) selon l'une des revendications 1 et 2, dans lequel ladite collerette (22) est adaptée à venir en appui contre le cylindre extérieur (10) et/ou contre le retour (11) afin de former une butée pour le piston (21) en ladite position rétractée.

4. Dispositif hydraulique (1) selon l'une des revendications 1 à 3, dans lequel le piston (21) est équipé de moyens de coulissement et de guidage (23), qui prennent appui sur le cylindre extérieur (10) et/ou sur le retour (11) de manière à guider le coulissement axial du piston (21) dans ladite rainure annulaire (14).

5. Dispositif hydraulique (1) selon la revendication 4, dans lequel lesdits moyens de coulissement et de guidage (23) sont fixés à ladite collerette (22).

6. Dispositif hydraulique (1) selon l'une des revendications 1 à 5, dans lequel le cylindre extérieur (10) et/ou le retour (11) comportent des moyens de coulissement et de guidage (16, 17), qui prennent appui sur le piston (21) de manière à guider le coulissement axial du piston (21) dans ladite rainure annulaire (14).

7. Dispositif hydraulique (1) selon l'une des revendications 1 à 6, dans lequel le cylindre extérieur (10) et/ou le retour (11) comportent des moyens de coulissement (18) qui sont adaptés à prendre appui sur la tige de piston (40) de manière à guider le coulissement axial du retour (11) sur la tige de piston (40).

8. Dispositif hydraulique (1) selon l'une des revendications 1 à 7, dans lequel ledit retour (11) constitue une pièce mécanique distincte dudit cylindre extérieur (10), qui est montée fixement à l'intérieur dudit cylindre extérieur (10).

9. Système de suspension et d'amortissement (2) à monter sur un châssis (50) d'un véhicule automobile, comportant :
- une tige de piston (40) adaptée à être fixée au châssis (50) du véhicule automobile, et
- un ressort (60) engagé sur la tige de piston (40),
**caractérisé en ce qu'**il comporte un dispositif hydraulique (1) conforme à l'une des revendications précédentes, qui est engagé sur ladite tige de piston (40) afin de s'interposer entre, d'une part, le châssis (50) du véhicule automobile, et, d'autre part, le ressort (60), et
**en ce que** la tige de piston (40) présente un conduit interne (31) dont une extrémité est connectée à un tuyau (41) d'amenée de fluide de compression, et dont l'autre extrémité débouche dans ladite chambre de compression (30).

## Patentansprüche

1. Hydraulische Vorrichtung (1) zur Regelung der Bodenfreiheit für ein Kraftfahrzeug, die geeignet ist, auf eine Kolbenstange (40) eines Aufhängungs- und Dämpfungssystems (2) des Kraftfahrzeugs aufgeschoben zu werden, um sich zwischen einerseits das Fahrgestell (50) des Kraftfahrzeugs und andererseits eine Feder (60) des Aufhängungs- und Dämpfungssystems (2) einzufügen, die enthält:
- einen Außenzylinder (10), von dem mindestens ein erstes Ende (32) offen ist, und
- einen Kolben (21), der durch das erste Ende (32) des Außenzylinders (10) eingeführt wird, wobei der Außenzylinder (10) an einem zweiten Ende (34) entgegengesetzt zu seinem ersten Ende (32) einen Rücklauf (11) aufweist, der mit dem Außenzylinder (10) eine Ringnut (14) begrenzt, innerhalb der der Kolben (21) axial gleiten kann, wobei der Rücklauf (11) ein freies Ende aufweist, in dem eine kreisförmige Öffnung (29) ausgespart ist, die geeignet ist, auf die Kolbenstange (40) aufgeschoben zu werden, so dass der Rücklauf (11) mit dem Kolben (21) eine Druckkammer (30) begrenzt,
**dadurch gekennzeichnet, dass** der Kolben (21) geeignet ist, in der Ringnut (14) zwischen zwei Stellungen "eingezogen" und "ausgefahren" zu gleiten, wobei der Kolben (21) einen Kragen (22) aufweist, der geeignet ist, gegen den Außenzylinder (10) und/oder gegen den Rücklauf (11) in Auflage zu kommen, um für den Kolben (21) in der ausgefahrenen Stellung einen Anschlag zu bilden.

2. Hydraulische Vorrichtung (1) nach Anspruch 1, wobei der Rücklauf (11) einen Innenzylinder (12) aufweist, der innen eine Aufnahme (15) begrenzt, die auf der Seite des freien Endes des Rücklaufs (11) von einer Kappe (13) verschlossen wird und auf der gegenüberliegenden Seite offen ist.

3. Hydraulische Vorrichtung (1) nach einem der Ansprüche 1 und 2, wobei der Kragen (22) geeignet ist, gegen den Außenzylinder (10) und/oder gegen den Rücklauf (11) in Auflage zu kommen, um einen Anschlag für den Kolben (21) in der eingezogenen Stellung zu bilden.

4. Hydraulische Vorrichtung (1) nach einem der Ansprüche 1 bis 3, wobei der Kolben (21) mit Gleit- und Führungseinrichtungen (23) ausgestattet ist, die sich auf den Außenzylinder (10) und/oder auf den Rücklauf (11) auflegen, um das axiale Gleiten des Kolbens (21) in der Ringnut (14) zu führen.

5. Hydraulische Vorrichtung (1) nach Anspruch 4, wobei die Gleit- und Führungseinrichtungen (23) am Kragen (22) befestigt sind.

6. Hydraulische Vorrichtung (1) nach einem der Ansprüche 1 bis 5, wobei der Außenzylinder (10) und/oder der Rücklauf (11) Gleit- und Führungseinrichtungen (16, 17) aufweisen, die sich auf den Kolben (21) auflegen, um das axiale Gleiten des Kolbens (21) in der Ringnut (14) zu führen.

7. Hydraulische Vorrichtung (1) nach einem der Ansprüche 1 bis 6, wobei der Außenzylinder (10) und/oder der Rücklauf (11) Gleiteinrichtungen (18) aufweisen, die geeignet sind, sich auf die Kolbenstange (40) aufzulegen, um das axiale Gleiten des Rücklaufs (11) auf der Kolbenstange (40) zu führen.

8. Hydraulische Vorrichtung (1) nach einem der Ansprüche 1 bis 7, wobei der Rücklauf (11) ein vom Außenzylinder (10) getrenntes mechanisches Bauteil bildet, das ortsfest im Inneren des Außenzylinders (10) montiert ist.

9. Aufhängungs- und Dämpfungssystem (2), das auf ein Fahrgestell (50) eines Kraftfahrzeugs montiert werden soll, das aufweist:
- eine Kolbenstange (40), die geeignet ist, am Fahrgestell (50) des Kraftfahrzeugs befestigt zu werden, und
- eine auf die Kolbenstange (40) aufgeschobene Feder (60),
**dadurch gekennzeichnet, dass** es eine hydraulische Vorrichtung (1) nach einem der vorhergehenden Ansprüche aufweist, die auf die Kolbenstange (40) aufgeschoben wird, um sich zwischen einerseits das Fahrgestell (50) des Kraftfahrzeugs und andererseits die Feder (60) einzufügen, und
dass die Kolbenstange (40) einen inneren Kanal (31) aufweist, von dem ein Ende mit einem Druckfluid-Zufuhrrohr (41) verbunden ist, und dessen anderes Ende in die Druckkammer (30) mündet.

## Claims

1. Hydraulic device (1) for adjusting ground clearance for a motor vehicle, capable of being engaged on a piston rod (40) of a suspension and damping system (2) of the motor vehicle in order to be interposed between, on the one hand, the chassis (50) of the motor vehicle and, on the other hand, a spring (60) of said suspension and damping system (2), comprising:
- an outer cylinder (10), at least one first end (32) thereof being open, and
- a piston (21) engaged through the first end (32) of the outer cylinder (10),
in which the outer cylinder (10) carries, at a second end (34) opposite the first end (32) of same, a return (11) that delimits with the outer cylinder (10) an annular groove (14) inside which the piston (21) is capable of sliding axially, said return (11) having a free end, a circular opening (29) capable of being engaged on the piston rod (40) being formed therein, such that said return (11) delimits with said piston (21) a compression chamber (30).
**characterized in that** the piston (21) is capable of sliding in the annular groove (14) between two retracted and deployed positions, the piston (21) comprising a flange (22) which is capable of bearing against the outer cylinder (10) and/or against the return (11) in order to form a stop for the piston (21) in said deployed position.

2. Hydraulic device (1) according to Claim 1, in which said return (11) comprises an internal cylinder (12) which internally delimits a housing (15) which is closed on the side of the free end of the return (11) by a cap (13) and open on the opposing side.

3. Hydraulic device (1) according to either of Claims 1 and 2, in which said flange (22) is capable of bearing against the outer cylinder (10) and/or against the return (11) in order to form a stop for the piston (21) in said retracted position.

4. Hydraulic device (1) according to one of Claims 1 to 3, in which the piston (21) is provided with means for sliding and guiding (23) which bear against the outer cylinder (10) and/or against the return (11) so as to guide the axial sliding of the piston (21) in said annular groove (14).

5. Hydraulic device (1) according to Claim 4, in which said means for sliding and guiding (23) are fixed to said flange (22).

6. Hydraulic device (1) according to one of Claims 1 to 5, in which the outer cylinder (10) and/or the return (11) comprise means for sliding and guiding (16, 17) which bear against the piston (21) so as to guide the axial sliding of the piston (21) in said annular groove (14).

7. Hydraulic device (1) according to one of Claims 1 to 6, in which the outer cylinder (10) and/or the return (11) comprise means for sliding (18) which are capable of bearing against the piston rod (40) so as to guide the axial sliding of the return (11) on the piston rod (40).

8. Hydraulic device (1) according to one of Claims 1 to 7, in which said return (11) constitutes a separate mechanical part of said outer cylinder (10) which is fixedly mounted inside said outer cylinder (10).

9. Suspension and damping system (2) to be mounted on a chassis (50) of a motor vehicle, comprising:
- a piston rod (40) capable of being fixed to the chassis (50) of the motor vehicle, and
- a spring (60) engaged on the piston rod (40),
**characterized in that** it comprises a hydraulic device (1) according to one of the preceding claims, which is engaged on said piston rod (40) in order to be interposed between, on the one hand, the chassis (50) of the motor vehicle, and, on the other hand, the spring (60), and
**in that** the piston rod (40) has an internal conduit (31), one end thereof being connected to a supply pipe (41) for compression fluid, and the other end thereof discharging into said compression chamber (30).
